# EUROPÄISCHE PATENTSCHRIFT

(11) **EP 3 277 524 B1**
(45) Veröffentlichungstag und Bekanntmachung des Hinweises auf die Patenterteilung: **20.02.2019**
(21) Anmeldenummer: 15805180.5
(22) Anmeldetag: 07.12.2015
(51) Int. Cl.: B60C 11/12, B60C 11/03, B60C 11/13

(54) **FAHRZEUGLUFTREIFEN**
TYRE
PNEUMATIQUE

(30) Priorität: 30.03.2015 DE 102015205718
(43) Veröffentlichungstag der Anmeldung: 07.02.2018
(73) Patentinhaber: Continental Reifen Deutschland GmbH, 30165 Hannover (DE)
(72) Erfinder: RITTWEGER, Stefan, 30826 Garbsen (DE); STADLER, Frank, 31275 Lehrte (DE); RÖGER, Bernhard, 30823 Garbsen (DE)
(74) Vertreter: Finger, Karsten
(86) Internationale Anmeldenummer: PCT/EP2015/078767
(87) Internationale Veröffentlichungsnummer: WO 2016/155854

(56) Entgegenhaltungen:
- EP-A2- 2 556 971
- WO-A1-2013/191119

## Beschreibung

Die Erfindung betrifft einen Fahrzeugluftreifen in Radialbauart mit einem Laufstreifen mit zumindest zwei Profilblockreihen, welche außenseitig durch je eine Umfangsrille begrenzt sowie voneinander durch eine Umfangsrille getrennt sind, wobei die Profilblockreihen durch im Wesentlichen parallel zueinander verlaufende Querrillen, welche die Profilblockreihen durchqueren, in Profilblöcke gegliedert sind, wobei die in der einen Profilblockreihe verlaufenden Querrillen im Wesentlichen parallel zu den in der anderen Profilblockreihe verlaufenden Querrillen verlaufen und die Profilblockreihen an der Laufstreifenoberfläche jeweils von parallel zueinander verlaufenden Blockkanten begrenzt sind und im Wesentlichen in radialer Richtung verlaufende Rillenflanken aufweisen, wobei jeweils eine Querrille aus der einen Profilblockreihe gegenüber einer Querrille aus der anderen Profilblockreihe unter einem in Umfangsrichtung vorliegenden Versatz von 5,0 mm bis zu 10,0 mm in die zwischen den Profilblockreihen verlaufende Umfangsrille einmündet.

Ein gattungsbildender Fahrzeugluftreifen der eingangs genannten Art ist beispielsweise aus der WO 2013/191119 A1 bekannt. Die außenseitig je durch eine Umfangsrille begrenzten Profilblockreihen sind von einschnittartig ausgebildeten Querrillen durchquert und derart in Profilblöcke gegliedert. Die die Profilblockreihen voneinander trennende Umfangsrille weist zwischen in axialer Richtung benachbarten Profilblöcken im Wesentlichen in Umfangsrichtung orientierte, im Bereich der Rillenmitte verlaufende sowie im Wesentlichen in der Profiltiefe ausgeführte kurze Rillenabschnitte auf. Die Rillenabschnitte verlaufen mit ihren in Umfangsrichtung liegenden Enden jeweils zu einer einschittartigen Querrille einer Profilblockreihe, mit dem einen Ende zu einer einschittartigen Querrille in der einen Profilblockreihe und mit dem anderen Ende zu einer einschittartigen Querrille in der anderen Profilblockreihe. Ein solcher Fahrzeugluftreifen soll ein hohes Wasserdrainagevermögen und gute Handlingeigenschaften auf nasser Fahrbahn aufweisen.

Darüber hinaus ist aus der EP 2 556 971 A2 ein Fahrzeugluftreifen mit einem Laufstreifen mit Profilblockelemente aufweisenden Profilblockreihen bekannt. Die Profilblockelemente sind durch Rillenflanken begrenzt, wobei Rillenflanken gleicher Orientierung in Umfangsrichtung zu einer zentral positionierten Umfangsrille hin durch die die jeweilige Profilblockreihe begrenzende Umfangsrille hindurch bis zur benachbarten Profilblockreihe als Stegflanken von Stegen ausgebildet sind, welche Profilblockelemente der einen Profilblockreihe mit Profilblockelementen der benachbarten Profilblockreihe durch die Umfangsrille hindurch verbinden. Jeder Steg bindet daher ein Profilblockelement der einen Profilblockreihe jeweils mit einem in Umfangsrichtung vorliegenden Abstand an das Profilblockelement der benachbarten Profilblockreihe an. Ein derartiger Fahrzeugluftreifen soll einen guten Rollwiderstand und gute Komforteigenschaften bei guten Handling- und Geräuscheigenschaften ohne Aquaplaningnachteile aufweisen.

Bei Fahrzeugluftreifen stehen oft unterschiedliche Anforderungen in Konkurrenz zueinander. So ist es für die Handlingeigenschaften, wie das Ansprechverhalten auf Lenkkräfte sowie die Übertragung von Lenkkräften auf die Fahrbahn, vorteilhaft, wenn eine möglichst große Kontaktfläche zwischen dem Laufstreifen und der Fahrbahn besteht. Eine große Kontaktfläche ergibt sich bei Laufstreifen mit einem geringem Negativanteil, also wenig Rillen. Ein geringer Negativanteil ist jedoch nachteilig für die Fahreigenschaften auf nasser Fahrbahn, insbesondere leiden das Wasserdrainagevermögen des Reifens und die Nassgriffeigenschaften.

Der Erfindung liegt daher die Aufgabe zu Grunde, bei einem Reifen der eingangs genannten Art den zwischen den Handlingeigenschaften auf trockener Fahrbahn und den Aquaplaningeigenschaften bestehenden Zielkonflikt besser als bisher zu lösen.

Die gestellte Aufgabe wird erfindungsgemäß dadurch gelöst, dass die zwischen den Profilblockreihen verlaufende Umfangsrille zwischen den gegeneinander versetzt in diese Umfangsrille einmündenden Querrillen von einem Steg unterbrochen ist, welcher einen Profilblock aus der einen Profilblockreihe mit einem Profilblock aus der anderen Profilblockreihe verbindet, wobei der Steg von Stegflanken begrenzt ist, welche als Fortsetzungen der Rillenflanken der Querrillen ausgebildet sind, wobei die Stegoberfläche niveaugleich mit den Oberflächen der Profilblöcke verläuft.

Erfindungsgemäß ausgeführte Stege stabilisieren axial benachbarte Profilblockreihen gegeneinander, wodurch gute Handlingeigenschaften erzielt werden. Dadurch, dass die Stege zwischen einmündenden Querrillen ausgebildet sind, ist weiterhin ein gutes Wasserdrainagevermögen gewährleistet, da Wasser direkt über diese Querrillen zur nächsten durchgängigen Umfangsrille abgeleitet werden kann. Ferner stellen die Stege zusätzliche Griffkanten zur Verfügung, sodass bei winterlichen Fahrbedingungen eine bessere Schneetraktion erzielt wird. Da die Schneetraktion ebenfalls im Zielkonflikt mit den Aquaplaningeigenschaften steht, tragen erfindungsgemäß angeordnete Stege zusätzlich dazu bei, auch diesen Zielkonflikt besser als bisher zu lösen. Die als Fortsetzungen der Rillenflanken der Querrillen ausgebildeten Stegflanken sind für eine gegenseitige Stabilisierung der Profilblockreihen von besonderem Vorteil.

Es ist ferner besonders vorteilhaft, wenn im Steg zumindest ein vorzugsweise geradlinig verlaufender Einschnitt ausgebildet ist, welcher jeweils zwischen der einen beim Steg einmündenden Querrille aus der einen Profilblockreihe und der anderen beim Steg einmündenden Querrille aus der anderen Profilblockreihe verläuft. Derartige Einschnitte bilden an der Laufstreifenoberfläche zusätzliche Griffkanten, sodass die Schneetraktion weiter verbessert wird.

Die Wirkung dieser zusätzlichen Griffkanten ist besonders ausgeprägt, wenn der Einschnitt in axialer Richtung oder alternativ, in Draufsicht betrachtet, unter einem spitzen Winkel von bis zu 30° zur axialen Richtung verläuft.

Bei einer bevorzugten Ausführungsform der Erfindung weist der Einschnitt über seine Erstreckung eine konstante Tiefe auf. Vorzugsweise beträgt die Tiefe 30% bis 60%, insbesondere 40% bis 50%, der vorgesehenen Profiltiefe. Besonders bevorzugt beträgt die Tiefe höchstens 45% der vorgesehenen Profiltiefe.

Bei einer weiteren bevorzugten Ausführungsform der Erfindung weist der Einschnitt eine Breite von 0,4 mm bis 2,0 mm, insbesondere von bis zu 0,8 mm, auf. Besonders bevorzugt weist der Einschnitt eine Breite von 0,6 mm auf.

Bei einer weiteren bevorzugten Ausführungsform der Erfindung ist im Steg mehr als ein Einschnitt ausgebildet, sodass der Laufstreifen weitere zusätzliche Griffkanten aufweist und die Schneetraktion weiter gesteigert wird. Besonders bevorzugt verlaufen die Einschnitte, in Draufsicht betrachtet, parallel oder zumindest im Wesentlichen parallel zueinander.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Ausschnitt eines Laufstreifens eines Fahrzeugluftreifens in Draufsicht mit einer Ausführungsform gemäß der Erfindung und
Fig. 2 einen Schnitt entlang der Linie II-II der Fig. 1.

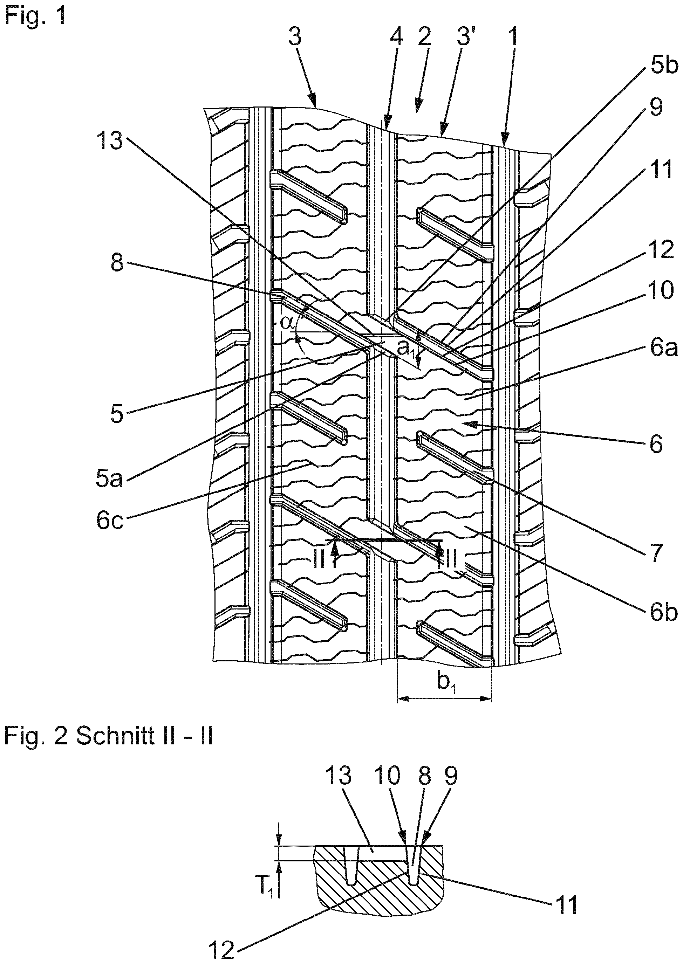

In Fig. 1 sind von einem Laufstreifen eines Fahrzeugluftreifens in Radialbauart ein beidseitig durch je eine Umfangsrille 1 begrenzter zentraler Laufstreifenbereich 2 und beidseitig an den zentralen Laufstreifenbereich 2 angrenzende weitere Profilbänder oder Profilblockreihen, von welchen lediglich die axial inneren Bereiche gezeigt sind, dargestellt. Erfindungsgemäß ausgeführte Laufstreifen sind vorzugsweise Laufstreifen von Winterreifen für Personenkraftwagen, Vans oder Light-Trucks.

Der dargestellte zentrale Laufstreifenbereich 2 weist zwei im Wesentlichen übereinstimmend ausgeführte Profilblockreihen 3, 3' auf, welche durch eine Umfangsrille 4 in axialer Richtung voneinander getrennt sind. Die Umfangsrille 4 ist, wie noch genauer beschrieben wird, über ihre Umfangserstreckung durch Stege 5 unterbrochen.

Jede Profilblockreihe 3, 3' setzt sich aus über den Umfang des Fahrzeugluftreifens aufeinanderfolgenden Profilblöcken 6, welche beim dargestellten Ausführungsbeispiel durch sacknutartig verlaufende Querrillen 7 gebildete Doppelblöcke sind, zusammen. Wie in Fig. 1 gezeigt sind die Profilblöcke 6 jeweils mit einer Vielzahl von Einschnitten 6c versehen, die insbesondere in an sich bekannter Weise verlaufen können und ausgeführt sein können. In Umfangsrichtung benachbarte Profilblöcke 6 sind jeweils durch eine Querrille 8 voneinander getrennt, welche die jeweilige Profilblockreihe 3 durchqueren. Die Querrillen 8 in den Profilblockreihen 3, 3' verlaufen im Wesentlichen parallel zueinander und unter einem spitzen Winkel α von bis zu 45°, insbesondere von bis zu 35°, zur axialen Richtung und beim gezeigten Ausführungsbeispiel geradlinig bzw. im Wesentlichen geradlinig.

Die sacknutartigen Querrillen 7 erstrecken sich ausgehend von den die Profilblockreihen 3, 3' außenseitig begrenzenden Umfangsrillen 1 über zumindest die Hälfte der Breite b₁ der Profilblockreihe 3, 3' und verlaufen im Wesentlichen parallel zu den Querrillen 8 und gliedern jeden Profilblock 6 in einen Blockteil 6a und einen Blockteil 6b.

Die Querrillen 8 sind an der Laufstreifenoberfläche von einer Blockkante 9 und einer Blockkante 10 begrenzt, wobei die Blockkante 9 an dem einen und die Blockkante 10 an dem anderen von zwei in Umfangsrichtung benachbarten Profilblöcken 6 ausgebildet ist. Bezüglich der Umfangsrichtung befinden sich die Blockkanten 9 aus der einen Profilblockreihe 3 und die Blockkanten 9 aus der anderen Profilblockreihe 3' in gleichen Positionen. Analoges gilt für die Blockkanten 10. Jede Querrille 8 ist ferner durch einen Rillengrund sowie durch eine an die Blockkante 9 anschließende Rillenflanke 11 und eine an die Blockkante 10 anschließende Rillenflanke 12 (Fig. 1 und Fig. 2) begrenzt, wobei die Rillenflanken 11, 12 im Wesentlichen in radialer Richtung verlaufen, insbesondere mit der radialen Richtung einen kleinen spitzen Winkel von bis zu 10° einschließen.

Die beiden Profilblockreihen 3, 3' sind in Umfangsrichtung gegeneinander versetzt, sodass die Querrillen 8 in die zwischen den Profilblockreihen 3, 3' verlaufende Umfangsrille 4 unter einem Versatz a₁ einmünden, welcher zwischen den bezüglich der Umfangsrichtung gleichpositionierten Blockkanten 9 oder 10 ermittelt wird und 5,0 mm bis 10,0 mm beträgt.

Die zwischen den Profilblockreihen 3, 3' verlaufende Umfangsrille 4 ist bei den unter dem Versatz a₁ einmündenden Querrillen 8 jeweils durch einen der Stege 5 unterbrochen, wobei jeder Steg 5 von zwei Stegflanken 5a, 5b begrenzt ist. Die Stegflanke 5a verläuft als Fortsetzung der Rillenflanke 11 der beim Steg einmündenden Querrille 8 aus der einen Profilblockreihe 3, die Stegflanke 5b verläuft als Fortsetzung der Rillenflanke 12 der beim Steg einmündenden Querrille 8 aus der anderen Profilblockreihe 3'.

Jeder Steg 5 verbindet daher einen Profilblock 6 der einen Profilblockreihe 3 mit einem Profilblock 6 der anderen Profilblockreihe 3' und weist an der Laufstreifenoberfläche eine durch den Versatz a₁ bestimmte Breite auf. Die Stegoberfläche befindet sich auf dem Niveau der Oberfläche der Profilblöcke 6.

Jeder Steg 5 wird von einem Einschnitt 13 durchquert, welcher jeweils zwischen einer Querrille 8 der einen Profilblockreihe 3 und einer Querrille 8 der anderen Profilblockreihe 3' verläuft und in diese Querrillen 8 einmündet. Bei dem in Fig. 1 gezeigten Ausführungsbeispiel verläuft der Einschnitt 13 in Draufsicht gerade und in axialer Richtung. Der Einschnitt 13 kann in Draufsicht auch unter einem spitzen Winkel von bis zu 30° zur axialen Richtung verlaufen.

Gemäß Fig. 2 weist der Einschnitt 13 über seinen Verlauf eine in radialer Richtung ermittelte konstante Tiefe T₁ auf, welche 30% bis 60%, insbesondere 40% bis 50%, und besonders bevorzugt bis zu 45% der vorgesehenen Profiltiefe - der Tiefe der Umfangsrillen 1 und 4 - des jeweiligen Fahrzeugluftreifens beträgt. Der Einschnitt 13 weist ferner eine Breite von 0,4 mm bis 2,0 mm, insbesondere von bis zu 0,8 mm, und besonders bevorzugt von etwa 0,6 mm auf.

Pro Steg 5 kann ferner mehr als ein Einschnitt, insbesondere können zwei Einschnitte, vorgesehen sein, wobei die Einschnitte innerhalb eines Steges vorzugsweise parallel zueinander verlaufen und vorzugsweise übereinstimmende Breiten und Tiefen aufweisen.

### Bezugsziffernliste

- 1: Umfangsrille
- 2: zentraler Laufstreifenbereich
- 3, 3': Profilblockreihe
- 4: Umfangsrille
- 5: Steg
- 5a, 5b: Stegflanke
- 6: Profilblock
- 6a, 6b: Blockteil
- 6c: Einschnitt
- 7, 8: Querrille
- 9, 10: Blockkante
- 11, 12: Rillenflanke
- 13: Einschnitt
- T₁: Tiefe

## Patentansprüche

1. Fahrzeugluftreifen in Radialbauart mit einem Laufstreifen mit zumindest zwei Profilblockreihen (3, 3'), welche außenseitig durch je eine Umfangsrille (1) begrenzt sowie voneinander durch eine Umfangsrille (4) getrennt sind, wobei die Profilblockreihen (3, 3') durch im Wesentlichen parallel zueinander verlaufende Querrillen (8), welche die Profilblockreihen (3, 3') durchqueren, in Profilblöcke (6) gegliedert sind, wobei die in der einen Profilblockreihe (3) verlaufenden Querrillen (8) im Wesentlichen parallel zu den in der anderen Profilblockreihe (3') verlaufenden Querrillen (8) verlaufen und die Profilblockreihen (3, 3') an der Laufstreifenoberfläche jeweils von parallel zueinander verlaufenden Blockkanten (9, 10) begrenzt sind und im Wesentlichen in radialer Richtung verlaufende Rillenflanken (11, 12) aufweisen,
**dadurch gekennzeichnet,**
**dass** jeweils eine Querrille (8) aus der einen Profilblockreihe (3) gegenüber einer Querrille (8) aus der anderen Profilblockreihe (3') unter einem in Umfangsrichtung vorliegenden Versatz (a₁) von 5,0 mm bis zu 10,0 mm in die zwischen den Profilblockreihen (3, 3') verlaufende Umfangsrille (4) einmündet und dass die zwischen den Profilblockreihen (3, 3') verlaufende Umfangsrille (4) jeweils zwischen den gegeneinander versetzt in diese Umfangsrille (4) einmündenden Querrillen (8) von einem Steg (5) unterbrochen ist, welcher einen Profilblock (6) aus der einen Profilblockreihe (3) mit einem Profilblock (6) aus der anderen Profilblockreihe (3') verbindet, wobei der Steg (5) von Stegflanken (5a, 5b) begrenzt ist, welche als Fortsetzungen der Rillenflanken (11, 12) der Querrillen (8) ausgebildet sind, wobei die Stegoberfläche niveaugleich mit den Oberflächen der Profilblöcke (6) verläuft.

2. Fahrzeugluftreifen nach Anspruch 1, **dadurch gekennzeichnet, dass** im Steg (5) zumindest ein, vorzugsweise geradlinig verlaufender Einschnitt (13) ausgebildet ist, welcher jeweils zwischen der einer beim Steg (5) einmündenden Querrille (8) aus der einen Profilblockreihe (3) und der anderen beim Steg (5) einmündenden Querrille (8) aus der anderen Profilblockreihe (3') verläuft.

3. Fahrzeugluftreifen nach Anspruch 2, **dadurch gekennzeichnet, dass** der Einschnitt (13) in axialer Richtung verläuft.

4. Fahrzeugluftreifen nach Anspruch 2, **dadurch gekennzeichnet, dass** der Einschnitt (13), in Draufsicht betrachtet, unter einem spitzen Winkel von bis zu 30° zur axialen Richtung verläuft.

5. Fahrzeugluftreifen nach einem der Ansprüche 2 bis 4, **dadurch gekennzeichnet, dass** der Einschnitt (13) über seine Erstreckung eine konstante Tiefe (T₁) aufweist.

6. Fahrzeugluftreifen nach einem der Anspruch 5, **dadurch gekennzeichnet, dass** die Tiefe (T₁) 30% bis 60%, insbesondere 40% bis 50%, der vorgesehenen Profiltiefe (T) beträgt.

7. Fahrzeugluftreifen nach Anspruch 5 oder 6, **dadurch gekennzeichnet, dass** die Tiefe (T₁) höchstens 45% der vorgesehenen Profiltiefe (T) beträgt.

8. Fahrzeugluftreifen nach einem der Ansprüche 1 bis 7, **dadurch gekennzeichnet, dass** der Einschnitt (13) eine Breite von 0,4 mm bis 2,0 mm, insbesondere von bis zu 0,8 mm, aufweist.

9. Fahrzeugluftreifen nach Anspruch 8, **dadurch gekennzeichnet, dass** der Einschnitt (13) eine Breite von 0,6 mm aufweist.

10. Fahrzeugluftreifen nach einem der Ansprüche 2 bis 9, **dadurch gekennzeichnet, dass** im Steg (5) mehr als ein Einschnitt (13) ausgebildet ist.

11. Fahrzeugluftreifen nach Anspruch 10, **dadurch gekennzeichnet, dass** die Einschnitte (13), in Draufsicht betrachtet, parallel oder zumindest im Wesentlichen parallel zueinander verlaufen.

## Claims

1. Pneumatic vehicle tyre of radial type of construction, having a tread with at least two profile block rows (3, 3') which are delimited at an outer side by in each case one circumferential channel (1) and are separated from one another by a circumferential channel (4), wherein the profile block rows (3, 3') are divided into profile blocks (6) by transverse channels (8) which run substantially parallel to one another and which extend through the profile block rows (3, 3'), wherein the transverse channels (8) running in one profile block row (3) run substantially parallel to the transverse channels (8) running in the other profile block row (3'), and the profile block rows (3, 3') are delimited at the tread surface in each case by block edges (9, 10) running parallel to one another and have channel flanks (11, 12) running substantially in a radial direction, **characterized in that** in each case one transverse channel (8) from one profile block row (3) opens, in relation to a transverse channel (8) from the other profile block row (3'), into the circumferential channel (4) running between the profile block rows (3, 3') with an offset (a₁) of 5.0 mm to 10.0 mm present in a circumferential direction, and **in that** the circumferential channel (4) running between the profile block rows (3, 3') is interrupted, in each case between the transverse channels (8) which open into said circumferential channel (4) in a manner offset with respect to one another, by a web (5) which connects a profile block (6) from one profile block row (3) to a profile block (6) from the other profile block row (3'), wherein the web (5) is delimited by web flanks (5a, 5b) which are formed as continuations of the channel flanks (11, 12) of the transverse channels (8), wherein the web surface runs at the same level as the surfaces of the profile blocks (6).

2. Pneumatic vehicle tyre according to Claim 1, **characterized in that**, in the web (5), there is formed at least one preferably rectilinearly running sipe (13) which runs in each case between one transverse channel (8), which opens in at the web (5), from one profile block row (3) and the other transverse channel (8), which opens in at the web (5), from the other profile block row (3').

3. Pneumatic vehicle tyre according to Claim 2, **characterized in that** the sipe (13) runs in an axial direction.

4. Pneumatic vehicle tyre according to Claim 2, **characterized in that** the sipe (13), as seen in plan view, runs at an acute angle of up to 30° with respect to the axial direction.

5. Pneumatic vehicle tyre according to any of Claims 2 to 4, **characterized in that** the sipe (13) has a constant depth (T₁) over its extent.

6. Pneumatic vehicle tyre according to any of Claim 5, **characterized in that** the depth (T₁) amounts to 30% to 60%, in particular 40% to 50%, of the provided profile depth (T).

7. Pneumatic vehicle tyre according to Claim 5 or 6, **characterized in that** the depth (T₁) amounts to at most 45% of the provided profile depth (T).

8. Pneumatic vehicle tyre according to any of Claims 1 to 7, **characterized in that** the sipe (13) has a width of 0.4 mm to 2.0 mm, in particular of up to 0.8 mm.

9. Pneumatic vehicle tyre according to Claim 8, **characterized in that** the sipe (13) has a width of 0.6 mm.

10. Pneumatic vehicle tyre according to any of Claims 2 to 9, **characterized in that** more than one sipe (13) is formed on the web (5).

11. Pneumatic vehicle tyre according to Claim 10, **characterized in that** the sipes (13), as seen in plan view, run parallel or at least substantially parallel to one another.

## Revendications

1. Pneumatique pour véhicule à structure radiale comprenant une bande de roulement comportant au moins deux rangées de blocs profilés (3, 3'), délimitées du côté extérieur par une rainure circonférentielle respective (1) et séparées les unes des autres par une rainure circonférentielle (4), les rangées de blocs profilés (3, 3') étant divisées en blocs profilés (6) par des rainures transversales (8) qui s'étendent sensiblement parallèlement les unes aux autres et qui traversent les rangées de blocs profils (3, 3'), les rainures transversales (8) qui s'étendent dans une rangée de blocs profilés (3) s'étendent sensiblement parallèlement aux rainures transversales (8) qui s'étendent dans l'autre rangée de blocs profilés (3') et les rangées de blocs profilés (3, 3') étant délimitées chacune au niveau de la surface de la bande de roulement par des bords de bloc (9, 10) qui s'étendent parallèlement les uns aux autres et comportant des flancs de rainure (11, 12) qui s'étendent sensiblement dans la direction radiale,
**caractérisé en ce que**
chaque rainure transversale (8) de l'une des rangées de blocs profilés (3) débouche dans la rainure circonférentielle (4), s'étendant entre les rangées de blocs profilés (3, 3'), avec un décalage (a₁) dans la direction circonférentielle de 5,0 mm à 10,0 mm par rapport à une rainure transversale (8) de l'autre des rangées de blocs profilés (3'), et **en ce que** la rainure circonférentielle (4), s'étendant entre les rangées de blocs profilés (3, 3'), à chaque fois entre les rainures transversales (8) débouchant dans cette rainure circonférentielle (4) en étant décalées les unes des autres, est interrompue par une nervure (5) qui relie un bloc profilé (6) de l'une des rangées de blocs profilés (3) à un bloc profilé (6) de l'autre des rangées de blocs profilés (3'), la nervure (5) étant délimitée par des flancs de nervure (5a, 5b) qui sont conçus comme des prolongements des flancs de rainure (11, 12) des rainures transversales (8), la surface de la nervure étant au même niveau que les surfaces des blocs profilés (6).

2. Pneumatique de véhicule selon la revendication 1, **caractérisé en ce qu'**au moins une encoche (13), de préférence rectiligne, est formée dans la nervure (5), laquelle encoche s'étend entre l'une des rainures transversales (8), débouchant près de la nervure (5), de l'une des rangées de blocs profilés (3) et l'autre rainure transversale (8), débouchant près de la nervure (5), de l'autre des rangées de blocs profilés (3').

3. Pneumatique pour véhicule selon la revendication 2, **caractérisé en ce que** l'encoche (13) s'étend dans la direction axiale.

4. Pneumatique pour véhicule selon la revendication 2, **caractérisé en ce que** l'encoche (13) s'étend, en vue de dessus, avec un angle aigu pouvant aller jusqu'à 30° par rapport à la direction axiale.

5. Pneumatique de véhicule automobile selon l'une des revendications 2 à 4, **caractérisé en ce que** l'encoche (13) a sur son étendue une profondeur constante (T₁).

6. Pneumatique de véhicule selon l'une des revendication 5, **caractérisé en ce que** la profondeur (T₁) est comprise entre 30 % et 60 %, en particulier entre 40 % et 50 %, de la profondeur de profilé (T) prévue.

7. Pneumatique pour véhicule selon la revendication 5 ou 6, **caractérisé en ce que** la profondeur (T₁) est au plus égale à 45 % de la profondeur de profilé (T) souhaitée.

8. Pneumatique pour véhicule selon l'une des revendications 1 à 7, **caractérisé en ce que** l'encoche (13) a une largeur allant de 0,4 mm à 2,0 mm, en particulier allant jusqu'à 0,8 mm.

9. Pneumatique pour véhicule selon la revendication 8, **caractérisé en ce que** l'encoche (13) a une largeur de 0,6 mm.

10. Pneumatique pour véhicule selon l'une des revendications 2 à 9, **caractérisé en ce que** plus d'une encoche (13) est ménagée dans la nervure (5).

11. Pneumatique pour véhicule selon la revendication 10, **caractérisé en ce que** les encoches (13) s'étendent, en vue de dessus, parallèlement ou au moins sensiblement parallèlement les unes aux autres.
